(19) Europäisches Patentamt
European Patent Office
Office européen des brevets

(11) **EP 4 160 186 B1**

(12) **EUROPEAN PATENT SPECIFICATION**

(45) Date of publication and mention
of the grant of the patent:
**15.10.2025   Bulletin 2025/42**

(21) Application number: **21864379.9**

(22) Date of filing: **01.09.2021**

(51) International Patent Classification (IPC):
**G01N 21/03** (2006.01)      **G01N 21/31** (2006.01)

(52) Cooperative Patent Classification (CPC):
**G01N 21/031; G01N 21/31;** G01N 2201/0631

(86) International application number:
**PCT/JP2021/032183**

(87) International publication number:
**WO 2022/050322 (10.03.2022 Gazette 2022/10)**

(54) **GAS ANALYZER**

GASANALYSEGERÄT

ANALYSEUR DE GAZ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **04.09.2020   JP 2020149326**

(43) Date of publication of application:
**05.04.2023   Bulletin 2023/14**

(73) Proprietor: **Fuji Electric Co., Ltd.
Kawasaki-shi,
Kanagawa 210-9530 (JP)**

(72) Inventors:
• **TAKEDA Naoki
Kawasaki-shi, Kanagawa 210-9530 (JP)**
• **HIGASHI Ryouichi
Kawasaki-shi, Kanagawa 210-9530 (JP)**

• **LI Bo
Kawasaki-shi, Kanagawa 210-9530 (JP)**

(74) Representative: **MERH-IP Matias Erny Reichl
Hoffmann
Patentanwälte PartG mbB
Paul-Heyse-Straße 29
80336 München (DE)**

(56) References cited:
| | |
|---|---|
| CN-A- 102 183 482 | JP-A- 2003 014 634 |
| JP-A- 2003 014 634 | JP-A- 2004 138 520 |
| JP-A- 2004 138 520 | JP-A- 2005 156 329 |
| JP-A- 2005 315 711 | JP-A- 2016 211 936 |
| JP-A- H0 943 141 | JP-A- H0 943 141 |
| JP-A- H10 318 881 | JP-A- S62 257 045 |
| JP-U- S5 987 653 | US-A- 5 854 685 |
| US-A- 5 867 329 | US-A1- 2012 170 043 |
| US-B1- 6 710 347 | US-B1- 8 654 334 |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

1. TECHNICAL FIELD

The present invention relates to a gas analyzer.

2. RELATED ART

Conventionally, a gas analyzer that utilizes spectrum analyzation has been known (for example, Patent Documents 1 to 8).

Patent Document 1: Japanese Patent Application Publication No. JP 2001-188043
Patent Document 2: US 5,867,329 A
Patent Document 3: JP 2004-138 520 A
Patent Document 4: CN 102 183 482 A
Patent Document 5: US 5,854,685 A
Patent Document 6: JP 2003-014 634 A
Patent Document 7: JP H09 43141 A
Patent Document 8: US 2012/170 043 A1

In particular, Patent Document 2 describes a multiple-pass reflection filter that utilizes a plurality of mirrors having a specific dielectric coating to provide reflection at a selected bandpass and absorption of the off-band wavelengths; and Patent Document 6 describes an exhaust gas analyzer based on ultraviolet absorption spectroscopy.

SUMMARY

It is preferable for a gas analyzer to be able to precisely measure a gas concentration.
In order to achieve the above, the present invention provides a gas analyzer according to claim 1.
A plurality of reflecting mirrors may be disposed inside the cell. In a reflection area of at least one reflecting mirror, a reflectance in at least two wavelengths may be lower than the average reflectance.
At least one reflecting mirror may be arranged outside the cell.
The light-receiving element may receive a radiation spectrum of light that has passed through the cell. The light-receiving element may output a received-light signal. The signal processing circuit may measure a concentration of the measurement target component based on one or more received-light signals output by the light-receiving element depending on light that enters into the light-receiving element in a predefined measurement period. The measurement period may include two or more flashes of the light source unit.
The light-receiving element may be exposed to light for multiple times in the measurement period. The signal processing circuit may integrate intensities of light in a plurality of received-light signals in the measurement period.

The signal processing circuit may integrate intensities of light in the plurality of received-light signals for every wavelength.
The signal processing circuit may change the integration of received-light signals in a maximum wavelength in the radiation spectrum of the light.
The signal processing circuit may average integration signals obtained by integrating the plurality of received-light signals, and measure a concentration of the measurement target component.
The light exposure period for the light-receiving element may be changed based on the intensity of the radiation spectrum of the light.
The light-receiving element may be exposed to light for once in the measurement period. The light exposure period for the light-receiving element may include two or more flashes of the light source unit.
The light source unit may be a flash lamp.
The summary clause does not necessarily describe all necessary features of the embodiments of the present invention. The present invention may also be a subcombination of the features described above.

BRIEF DESCRIPTION OF THE DRAWINGS

Fig. 1 illustrates one example of a gas analyzer 100 according to an embodiment.

Fig. 2 illustrates one example of a radiation spectrum of light 6 emitted by a light source unit 2.

Fig. 3 illustrates a relationship between an intensity of the light 6 in a predefined wavelength and a measurement error.

Fig. 4 illustrates one example of a reflection characteristic of a reflecting mirror 12.

Fig. 5 illustrates one example of a radiation spectrum of light 6 emitted by a cell 10.

Fig. 6 illustrates another example of the reflection characteristic of the reflecting mirror 12.

Fig. 7 illustrates another example of a reflection area 50 of the reflecting mirror 12.

Fig. 8 illustrates an example of structure of a gas analyzer 200 according to another embodiment.

Fig. 9 illustrates an example of structure of a gas analyzer 300 according to yet another embodiment.

Fig. 10 illustrates one example of a lamp operation cycle, a flash cycle, and a light exposure period.

Fig. 11 illustrates one example of a lamp operation cycle, a flash cycle, and a light exposure period according to a comparative example.

Fig. 12 illustrates a differential absorbance of every wavelength when a number of integrations is changed.

Fig. 13 illustrates comparison of intensities of radiation spectra of the light 6 between an example illustrated in Fig. 10 and the comparative example illustrated in Fig. 11.

Fig. 14 illustrates another example of the lamp operation cycle, the flash cycle, and the light exposure period.

Fig. 15 illustrates an example of structure of a gas analyzer 400 according to another embodiment.

Fig. 16 illustrates a relationship between a number of irradiations of the light source unit 2 in a measurement period and a measurement error.

DESCRIPTION OF EXEMPLARY EMBODIMENTS

Hereinafter, the present invention will be described through embodiments of the invention, but the following embodiments do not limit the scope of the invention, which is defined by the claims. In addition, not all combinations of features described in the embodiments are essential to the solution of the invention.

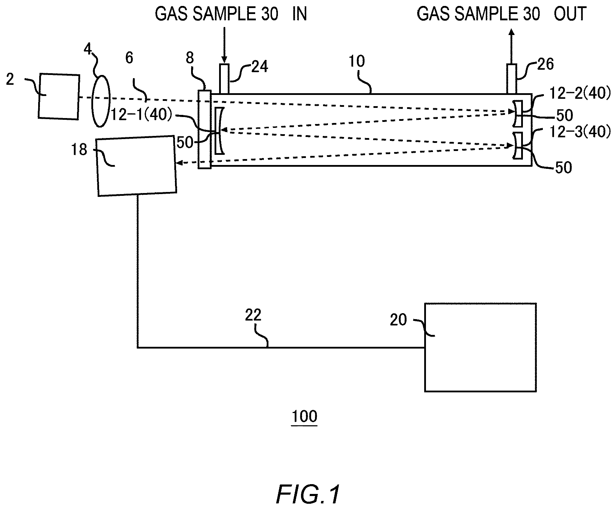

Fig. 1 illustrates one example of a gas analyzer 100 according to an embodiment. The gas analyzer 100 includes a light source unit 2, a collimator lens 4, a cell 10, a reflecting mirror 12, a light-receiving element 18, a signal processing circuit 20, and a communication line 22. The gas analyzer 100 is configured to measure a concentration of a measurement target component contained in a gas sample 30. In the present example, the gas analyzer 100 measures the concentration of the measurement target component by means of differential optical absorption spectroscopy (DOAS) with which a variation in the light source unit 2 can be removed. By using the differential optical absorption spectroscopy, the concentration of the measurement target component can be measured only with a small-scale fluctuating component in an absorption spectrum, which can provide a stable measurement.

The gas sample 30 is a gas containing the measurement target component. In the present example, the gas sample 30 is an exhaust gas that flows in a flue. The measurement target component is a measurement target of the gas analyzer 100, e.g., $SO_3$. The measurement target component may also be $SO_2$, $SO_x$, $NO_2$, $NO_3$, $NO$, $NH_3$, or $NO_x$.

The light source unit 2 emits light 6. In the present example, the light source unit 2 emits light 6 including an absorption wavelength of the measurement target component. By way of example, the light source unit 2 is a flash lamp that can control flash-time to be extremely short. The light source unit 2 may be a xenon flash lamp. By using the xenon flash lamp as the light source unit 2, the light 6 can be stably emitted. It is preferable for the light source unit 2 of the present example to flash at a regular flash cycle.

The collimator lens 4 collects light 6 emitted from the light source unit 2. The light 6 collected by the collimator lens 4 is then irradiated to a cell window 8 of the cell 10.

The cell 10 is for encapsulating the gas sample 30. The cell 10 has the cell window 8, a gas sample inlet port 24, and a gas sample outlet port 26. The cell window 8 is disposed facing the collimator lens 4, and is irradiated with the light 6. The light 6 is introduced into the cell 10 through the cell window 8. The gas sample inlet port 24 introduces the gas sample 30 to the cell 10. The gas sample outlet port 26 discharges the gas sample 30 from the cell 10. The gas sample inlet port 24 and the gas sample outlet port 26 are connected to the flue, for example. When analyzing a concentration of the measurement target component contained in the gas sample 30, the gas sample 30 may be introduced into the cell 10 through the gas sample inlet port 24. After the analyzing, the gas sample 30 may be discharged from the cell 10 through the gas sample outlet port 26. The cell 10 may have a pump for introducing or discharging the gas sample 30. The cell 10 may have a filter for removing dust in the gas sample 30, and for introducing this gas sample 30 into the cell 10.

The reflecting mirror 12 is disposed inside the cell 10. A plurality of reflecting mirrors 12 may be disposed inside the cell 10. In the present example, a reflecting mirror 12-1, a reflecting mirror 12-2, and a reflecting mirror 12-3 are disposed inside the cell 10. In Fig. 1, the reflecting mirror 12-1 is disposed on a side having the gas sample inlet port 24, and the reflecting mirrors 12-2 and 12-3 are disposed on a side having the gas sample outlet port 26. Although the reflecting mirrors 12-2 and 12-3 are separately illustrated in Fig. 1, the reflecting mirrors 12-2 and 12-3 may also form an integrated mirror. The cell 10 may be in a form of a white cell. The side having the gas sample inlet port 24 refers to an area inside the cell 10 which is on a side closer to the gas sample inlet port 24 relative to a center of the cell 10, and the side having the gas sample outlet port 26 refers to an area inside the cell 10 which is on a side closer to the gas sample outlet port 26 relative to the center of the cell 10.

The reflecting mirror 12 is arranged such that the light 6 introduced in the cell 10 is reflected for multiple times inside the cell 10. More specifically, the reflecting mirror 12 is arranged such that the light 6 is reflected at least once in each of the area on the side having the gas sample inlet port 24 and the area on the side having the gas sample outlet port 26. The reflecting mirror 12 is arranged such that the light 6 is reflected for m times (m is an integer being one or more) in the area on the side having the gas sample inlet port 24, and reflected for m+once in the area on the side having the gas sample outlet port 26. In this case, the light 6 is emitted outside the cell 10 from the cell window 8. In the example of Fig. 1, the reflecting mirror 12 is arranged such that the light 6 is reflected for three times. A number of reflections is not limited to three. By means of adjusting the reflecting mirror 12, the light 6 may be reflected for three times or more. The number of reflections may also be 15 times. By means of increasing the number of reflections, a length of a light path of the light 6 can be longer, so that a concentration can be precisely measured even with a small amount of the measurement target component. The reflecting mirror 12 may also function as an adjustment unit 40 described below. The reflecting mirror 12 has a reflection area 50. The reflection area of the reflecting mirror 12 is where the reflecting mirror 12 reflects the light 6.

The light-receiving element 18 is for obtaining a radiation spectrum of the light 6 that has passed through the cell 10. The light-receiving element 18 is for obtaining an intensity of the radiation spectrum of the light 6 for every wavelength. The light-receiving element 18 may have a filter. In the present example, the filter of the light-receiving element 18 spectrally disperses light having a wavelength in a range of from 200 nm to 400 nm only. The filter may disperse the light 6 into a plurality of wavelength bands. In this case, the light-receiving element 18 can obtain an intensity of the light 6 for every wavelength. The light-receiving element 18 may obtain an intensity of the light 6 in a plurality of wavelengths. By way of example, the light-receiving element 18 is a CMOS (Complementary Metal Oxide Semiconductor) line sensor. The radiation spectrum of the light 6 obtained by the light-receiving element 18 is sent as a received-light signal to the signal processing circuit 20.

The signal processing circuit 20 is for processing the received-light signal of the light-receiving element 18. The signal processing circuit 20 is for measuring the concentration of the measurement target component of the gas sample 30 based on the received-light signal of the light-receiving element 18. The signal processing circuit 20 may measure the concentration of the measurement target component by obtaining a change in the intensity of the light 6 in an absorption wavelength of the measurement target component. The signal processing circuit 20 is connected to the light-receiving element 18 through the communication line 22. Although the signal processing circuit 20 and the light-receiving element 18 are connected with a wire in the example of Fig. 1, they may be wirelessly connected instead.

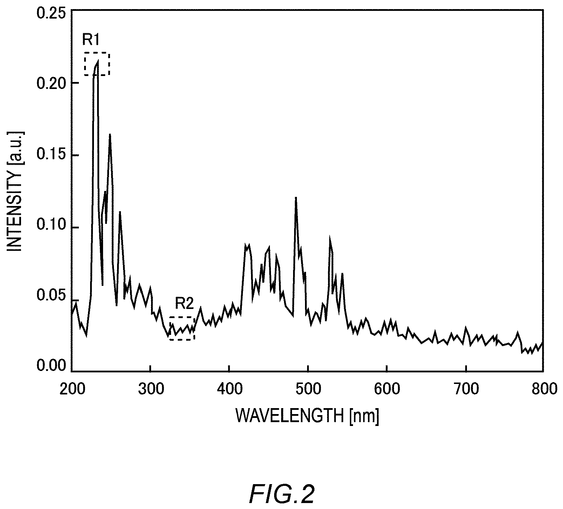

Fig. 2 illustrates one example of the radiation spectrum of the light 6 emitted by the light source unit 2. In Fig. 2, a wavelength is represented along a horizontal axis, and an intensity of the light 6 is represented along a vertical axis.

In Fig. 2, when the wavelength is 230 nm, the intensity of the light 6 is 0.20 or more (see the area R1). When the wavelength is 330 nm, the intensity of the light 6 is 0.05 or less (see the area R2). The intensity in the area R1 is four times as high as the intensity in the area R2, or more. Therefore, there is a difference in intensities in a range of light received by the light-receiving element 18 (in a range where the wavelength is from 200 nm to 400 nm).

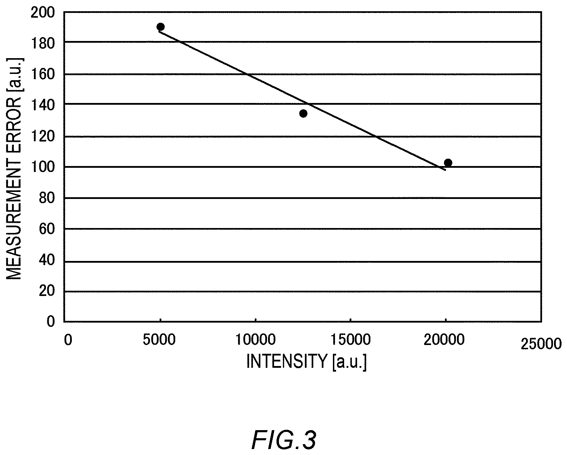

Fig. 3 illustrates a relationship between an intensity of the light 6 in a predefined wavelength and a measurement error. It is indicated that the smaller a value in a vertical axis in Fig. 3 is, the fewer the measurement errors are. In Fig. 3, as the intensity of the light 6 becomes higher, the measurement error is reduced more. In other words, as the intensity of the light 6 becomes higher, measurement precision improves more. One cause of the measurement error may be considered as a thermal noise in the light-receiving element 18, a stray light that enters into the light-receiving element 18, or the like. The higher the intensity of the light 6 is, the higher a signal-to-noise ratio can be.

A dynamic range of the CMOS line sensor used for the light-receiving element 18 is generally about 100 dB, which is, when applied to the intensity of the light 6 represented along a horizontal axis in Fig. 3, 65535 is the maximum value. As illustrated in Fig. 2, there is about a four times difference in intensities in the range of the light received by the light-receiving element 18 (in the range where the wavelength is from 200 nm to 400 nm). When an upper limit value, e.g. 65535, of the dynamic range of the light-receiving element 18 is applied to the intensity in the area R1, a measurement value of the light-receiving element 18 which corresponds to a radiation intensity in the area R2 is 16383.75 (65535÷4) or less. That is, if there is a difference in intensities of the light 6 in the plurality of wavelengths, the dynamic range of the light-receiving element 18 becomes small in some wavelength among the plurality of wavelengths, and measurement precision in this wavelength will be degraded. Because of that, when measuring intensities of the light 6 in the plurality of wavelengths, it is preferable to reduce the difference in the intensities of the light 6 as much as possible between each measurement wavelength.

In the present example, the gas analyzer 100 includes the adjustment unit 40. The adjustment unit 40 is for adjusting a characteristic of the radiation spectrum of the light 6 for every wavelength. The adjustment unit 40 adjusts the radiation spectrum of the light 6 that has been radiated from the light source unit 2. The adjustment unit 40 is arranged on a light path from the light source unit 2 to the light-receiving element 18. In the present example, the adjustment unit 40 is the reflecting mirror 12. By adjusting the reflection characteristic at the reflecting mirror 12 for every wavelength, the radiation spectrum of the light 6 transmitting in the cell 10 can be adjusted. Since the gas analyzer 100 includes the adjustment unit 40 for adjusting the characteristic of the radiation spectrum of the light 6 for every wavelength, a difference in intensities of radiation spectra of the light 6 can be reduced, and thereby measurement precision can be improved.

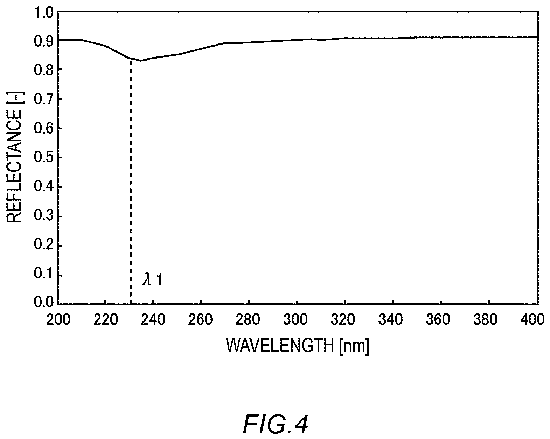

Fig. 4 illustrates one example of the reflection characteristic of the reflecting mirror 12. Fig. 4 illustrates a reflectance of the reflecting mirror 12 for every wavelength. In the present example, the reflecting mirrors 12-1, 12-2, and 12-3 have the reflection characteristic illustrated in Fig. 4. All reflection areas 50 of the reflecting mirror 12-1, all reflection areas 50 of the reflecting mirror 12-2, and all reflection areas 50 of the reflecting mirror 12-3 may have the reflection characteristic illustrated in Fig. 4.

As illustrated in Fig. 4, a certain wavelength $\lambda 1$ has a reflectance lower than an average reflectance in a predefined wavelength range at the reflecting mirror 12. For example, the predefined wavelength range may be, among the plurality of wavelengths measured at the light-receiving element 18, a range from a minimum wavelength to a maximum wavelength. The predefined wavelength range may also be a wavelength range where the light-receiving element 18 has sensibility. The predefined wavelength range may also be a wavelength range where the light 6 emitted by the light source unit 2 has an intensity. In the example of Fig. 4, the average reflectance is an average of reflectances within a range of from 200 nm to 400 nm. In the example of Fig. 4, the average reflectance is a value close to 0.9. The certain wavelength $\lambda 1$ has a reflectance lower than the average reflectance. By way of example, the certain wavelength $\lambda 1$ is a wavelength having a maximum intensity in the radiation spectrum of the light 6 emitted by the light source unit 2. The reflectance in a range of this wavelength may be a local minimum value in the certain wavelength $\lambda 1$. In addition, the reflectance in the certain wavelength $\lambda 1$ may be lower than a median value between the average value and the local minimum value in the range of this wavelength. By way of example, the certain wavelength $\lambda 1$ is 230 nm. In the certain wavelength $\lambda 1$ having the maximum intensity of the radiation spectrum of the light 6 emitted by the light source unit 2, an intensity of light reflected at the reflecting mirror 12 can be reduced, thereby a difference in intensities of the radiation spectra of the light 6 received by the light-receiving element 18 can be reduced.

An emitted light intensity in the wavelength $\lambda$ in the light 6 emitted from the cell 10 is referred to as $I_{\lambda out}$, a number of times to be reflected at the reflecting mirror 12 inside the cell 10 is referred to as n times, an incident light intensity in the wavelength $\lambda$ in the light 6 that enters into the cell 10 is referred to as $I_{\lambda in}$, and a reflectance of the wavelength $\lambda$ is referred to as $R_{\lambda}$. The reflectance $R_{\lambda}$ is lower than one. The emitted light intensity $I_{\lambda out}$ is represented in the following equation 1. As represented in the following equation 1, the emitted light intensity $I_{\lambda out}$ can be reduced by increasing n.

[EQUATION 1] $$I_{\lambda out} = I_{\lambda in} \times R_{\lambda}^{n}$$

The reflection characteristic of the reflecting mirror 12 can be adjusted by depositing a dielectric multi-layer on the reflecting mirror 12. By means of adjusting a film thickness, material, layer structure and the like of the dielectric multi-layer and thereby improving a reflectance other than the reflectance of the certain wavelength $\lambda 1$, the reflectance of the certain wavelength $\lambda 1$ can become relatively low. The dielectric multi-layer may be partially disposed in the reflection area of the reflecting mirror 12.

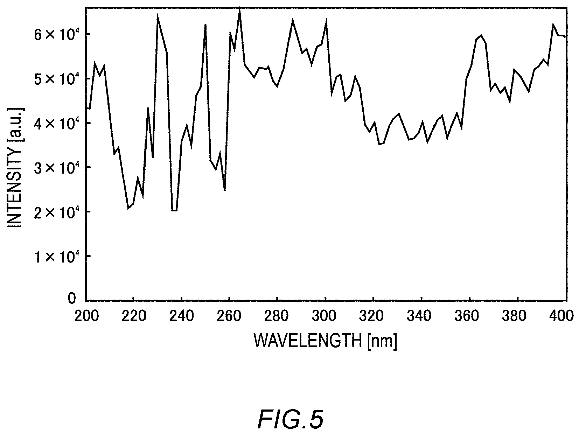

Fig. 5 illustrates one example of the radiation spectrum of the light 6 emitted by the cell 10. In Fig. 5, a wavelength is represented along a horizontal axis, and an intensity of the light 6 is represented along a vertical axis. As illustrated in Fig. 5, the intensity of the light 6 is weakened in the vicinity of a wavelength of 230 nm. Since the adjustment unit 40 is disposed inside the cell 10, a difference in intensities of the radiation spectra of the light 6 can be reduced, and thereby measurement precision can be improved.

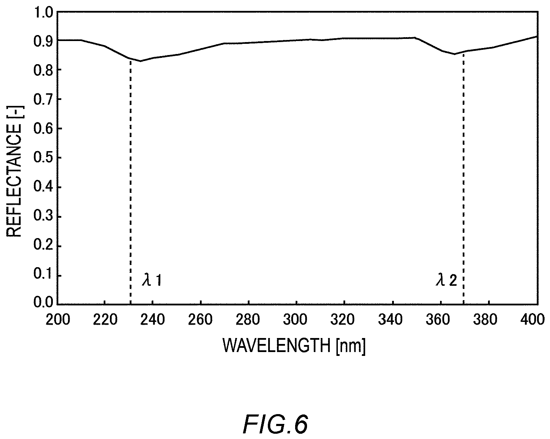

Fig. 6 illustrates another example of the reflection characteristic of the reflecting mirror 12. The reflection characteristic may be a reflectance being lower than an average reflectance in a plurality of certain wavelengths. The reflection characteristic in Fig. 6 is a reflectance being lower than the average reflectance in not only the certain wavelength $\lambda 1$ but also in a certain wavelength $\lambda 2$. By way of example, the certain wavelength $\lambda 2$ is 370 nm. An intensity can be reduced also in the certain wavelength $\lambda 2$, and intensity can be reduced in a different certain wavelength. The reflectance in the certain wavelength $\lambda 1$ and the reflectance in the certain wavelength $\lambda 2$ may be the same, or may be different. Between two certain wavelengths, a reflectance of one certain wavelength having a higher intensity in the radiation spectrum of the light 6 emitted by the light source unit 2 may be lower than a reflectance of the other certain wavelength.

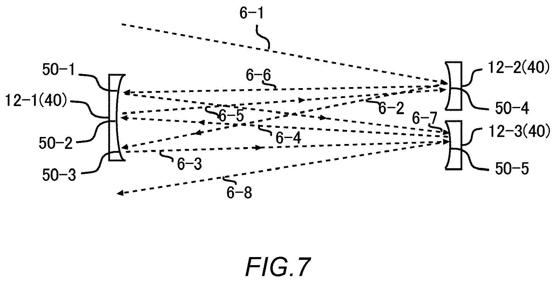

Fig. 7 illustrates another example of the reflection area 50 of the reflecting mirror 12. In Fig. 7, a reflecting mirror 12-1 has a reflection area 50-1, a reflection area 50-2, and a reflection area 50-3. The reflecting mirror 12-2 has a reflection area 50-4. The reflecting mirror 12-3 has a reflection area 50-5. In the example of Fig. 7, the light 6 reflects in the order of a light 6-1, a light 6-2, a light 6-3, a light 6-4, a light 6-5, a light 6-6, a light 6-7, and a light 6-8. In Fig. 7, a number of reflections is seven.

In the reflection area 50 of at least one reflecting mirror 12, reflectances in at least two wavelengths may be lower than the average reflectance. In the example of Fig. 7, at least one reflection area 50 of the reflecting mirror 12-1, i.e., at least one of the reflection areas 50-1, 50-2, or 50-3, may have the reflection characteristic illustrated in Fig. 6. In that case, the rest of the reflection areas 50 of the reflecting mirror 12-1, the reflection area 50-4 of the reflecting mirror 12-2, and the reflection area 50-5 of the reflecting mirror 12-3 may have the reflection characteristic illustrated in Fig. 4. Alternatively, the reflection area 50-4 of the reflecting mirror 12-2 may have the reflection characteristic illustrated in Fig. 6, and all of the reflection areas 50 of the reflecting mirror 12-1 and the reflection area 50-5 of the reflecting mirror 12-3 may have the reflection characteristic illustrated in Fig. 4. Or the reflection area 50-5 of the reflecting mirror 12-3 may have the reflection characteristic illustrated in Fig. 6, and all of the reflection areas 50 of the reflecting mirror 12-1 and the reflection area 50-4 of the reflecting mirror 12-2 may have the reflection characteristic illustrated in Fig. 4. Since at least one reflection area 50 has the reflection characteristic illustrated in Fig. 6, a number of times to be reflected with the reflection characteristic illustrated in Fig. 6 becomes less than the number of times to be reflected with the reflection characteristic illustrated in Fig. 4. Therefore, the certain wavelength $\lambda 2$ is weakened for the number of times less than the certain wavelength $\lambda 1$, and thereby an intensity of the radiation spectrum of the light 6 for every wavelength can be adjusted. All of the reflection areas 50 of the reflecting mirror 12-1, the reflection area 50-2 of the reflecting mirror 12-2, and the reflection area 50-3 of the reflecting mirror 12-3 may have the reflection characteristic illustrated in Fig. 6.

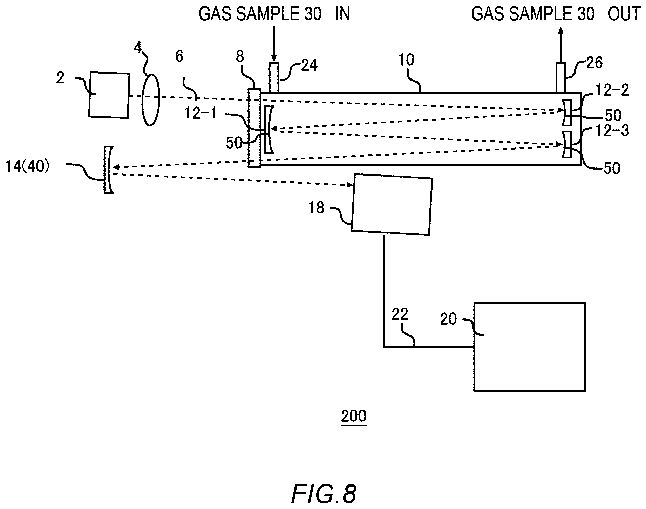

Fig. 8 illustrates an example of structure of a gas analyzer 200 according to another embodiment. The gas analyzer 200 of the present embodiment is different from the gas analyzer 100 in Fig. 1 in that the gas analyzer 200 includes a reflecting mirror 14 as an additional adjustment unit 40 outside the cell 10. Otherwise, configuration of the gas analyzer 200 may be the same as that of the gas analyzer 100.

At least one reflecting mirror 14 is arranged outside the cell 10, so that an intensity of a radiation spectrum of the light 6 can be reduced after being emitted from the cell 10. Thereby, without changing inner configuration of the cell 10, the intensity of the radiation spectrum of the light 6 can be easily adjusted.

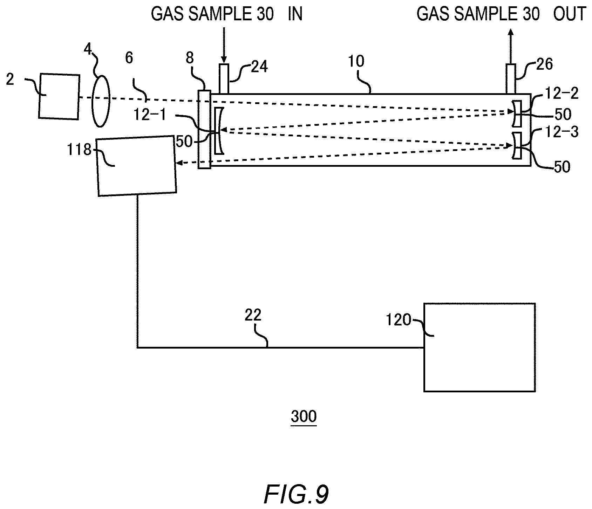

Fig. 9 illustrates an example of structure of a gas analyzer 300 according to yet another embodiment. The gas analyzer 300 includes a light source unit 2, a collimator lens 4, a cell 10, a reflecting mirror 12, a light-receiving element 118, a signal processing circuit 120, and a communication line 22. The gas analyzer 300 measures a concentration of a measurement target component contained in a gas sample 30. Configuration of the light source unit 2, the collimator lens 4, the cell 10, and the reflecting mirror 12 may be the same as that of the gas analyzer 100 in Fig. 1. Note that, the reflecting mirror 12 may be or may not be the adjustment unit 40. In the present example, the reflecting mirror 12 is not the adjustment unit 40.

The light-receiving element 118 obtains a radiation spectrum of a light 6 that has passed through the cell 10. The light-receiving element 118 obtains an intensity of the radiation spectrum of the light 6 for every wavelength. The light-receiving element 118 may have a filter. In the present example, the filter of the light-receiving element 118 spectrally disperses light having a wavelength in a range of from 200 nm to 400 nm only. By way of example, the light-receiving element 118 is a CMOS (Complementary Metal Oxide Semiconductor) line sensor. The radiation spectrum of the light 6 obtained by the light-receiving element 118 is output as a received-light signal to the signal processing circuit 120. The light-receiving element 118 is for outputting the received-light signal depending on the light 6 that enters into the light-receiving element 118 in a predefined measurement period. The measurement period is a period in which the light-receiving element 118 obtains the radiation spectrum of the light 6. The light-receiving element 118 is exposed to light for at least once during the measurement period. In the light exposure, the light 6 is irradiated onto the light-receiving element 118 during a predefined light exposure period, and the light-receiving element 118 generates, depending on an integrated intensity of the light received in this period, a received-light signal. The light exposure may be performed multiple times during the measurement period. In other words, the light-receiving element 118 may generate a plurality of received-light signals during the measurement period. The light exposure on the light-receiving element 118 may be performed by controlling an electronic shutter of the light-receiving element 118. The light exposure on the light-receiving element 118 may be performed by controlling a mechanical shutter of the light-receiving element 118.

The signal processing circuit 120 processes the received-light signal of the light-receiving element 118. The signal processing circuit 120 measures the concentration of the measurement target component in the gas sample 30 based on one or a plurality of received-light signals output by the light-receiving element 118 during the measurement period. The signal processing circuit 120 may measure the concentration of the measurement target component by obtaining a change in an intensity in an absorption wavelength of the measurement target component. The signal processing circuit 120 is connected to the light-receiving element 118 through the communication line 22.

In the present example, the measurement period is a period including two or more flashes of the light source unit 2. By means of making the measurement period include two or more flashes of the light source unit 2, intensities of a plurality of lights 6 emitted by the light source unit 2 can be integrated. For example, with a light source having a short emission period, such as a flash lamp, flash-intensities are likely to vary in every flash. In addition, a shape of a radiation spectrum of light may change in every flash. According to the present example, a measurement error caused by characteristic variations of every flash of the light source unit 2 can be reduced.

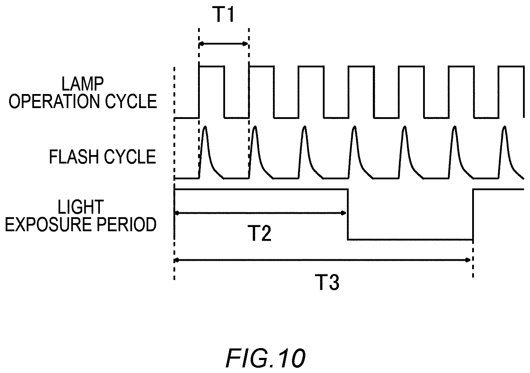

Fig. 10 illustrates one example of a lamp operation cycle, a flash cycle, and a light exposure period. In Fig. 10, the lamp operation cycle and the flash cycle are shown as T1, the light exposure period is shown as T2, and the measurement period is shown as T3. In the present example, the light exposure period T2 is three times or more of the light exposure cycle T1, and the measurement period T3 is six times or more of the light exposure cycle T1.

In the example of Fig. 10, the light-receiving element 118 is exposed to light for once in one measurement period T3. Also, the light exposure period T2 for the light-receiving element 118 is twice or more the light exposure cycle T1. In the example of Fig. 10, although there is one light exposure in the measurement period T3, the light exposure period T2 for the light-receiving element 118 is twice or more of the light exposure cycle T1. Therefore, a plurality of lights can be integrated and thereby an S/N ratio can be improved.

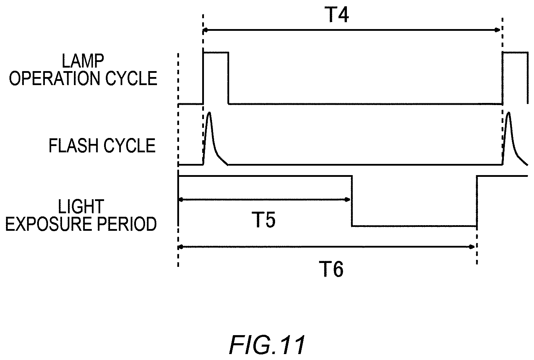

Fig. 11 illustrates one example of a lamp operation cycle, a flash cycle, and a light exposure period according to a comparative example. In Fig. 11, the lamp operation cycle and the flash cycle are shown as T4, the light exposure period is shown as T5, and the measurement period is shown as T6. The flash cycle T4 and the measurement period T6 are six times more of the light exposure cycle T1, and the light exposure period T5 is three times or more of the light exposure cycle T1. The light exposure period T2 and the light exposure period T5 are equal, and the measurement period T3 and the measurement period T6 are equal.

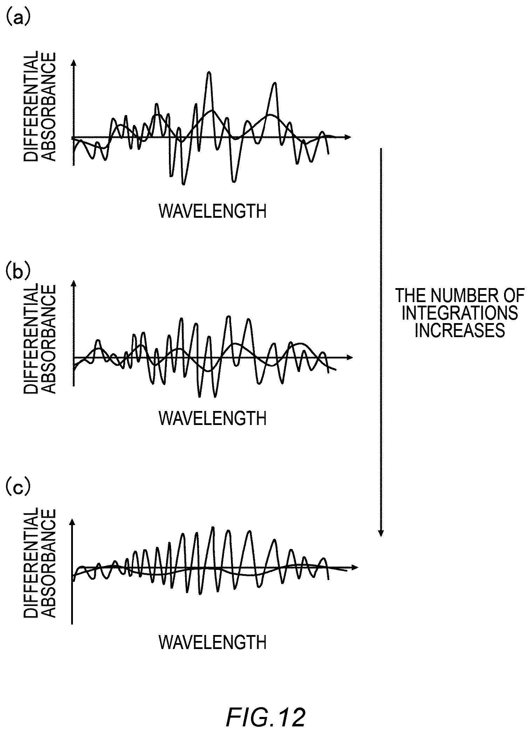

Fig. 12 illustrates a differential absorbance of every wavelength when a number of integrations is changed. In Fig. 12, the number of integrations changes in the order of from (a) to (c). As illustrated in Fig. 12, when the number of integrations increases, measurement errors are reduced. With a light source having a short emission period, such as a flash lamp, flash-intensities are likely to vary in every flash. By means of increasing the number of integrations, characteristic variations of every flash of the light source unit 2 can be averaged. Therefore, measurement errors can be reduced in the example illustrated in Fig. 10 more than the comparative example illustrated in Fig. 11.

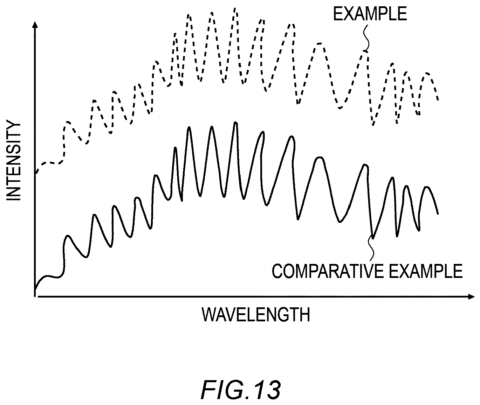

Fig. 13 illustrates comparison of intensities of radiation spectra of the light 6 between the example illustrated in Fig. 10 and the comparative example illustrated in Fig. 11. As illustrated in Fig. 13, since the plurality of lights is integrated in the example illustrated in Fig. 10, the intensity can be higher in the example illustrated in Fig. 10 than the comparative example illustrated in Fig. 11. In addition, by means of averaging, measurement errors can be reduced in the example illustrated in Fig. 10 more than the comparative example illustrated in Fig. 11.

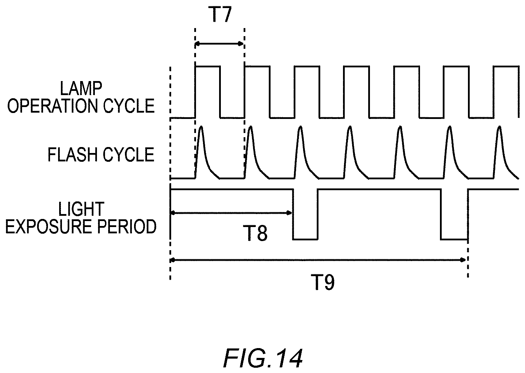

Fig. 14 illustrates another example of a lamp operation cycle, a flash cycle, and a light exposure period. In Fig. 14, the lamp operation cycle and the flash cycle are shown as T7, the light exposure period is shown as T8, and the measurement period is shown as T9. The flash cycle T7 is equal to the light exposure cycle T1, the light exposure period T8 is twice or more of the light exposure cycle T1, and the measurement period T9 is six times or more of the light exposure cycle T1. The measurement period T9 is equal to the measurement period T3.

The light-receiving element 118 may be exposed to light for multiple times in the measurement period T9. In Fig. 14, the light-receiving element 118 is exposed to light for twice in the measurement period T9. The signal processing circuit 120 may integrate intensities of the light 6 in a plurality of received-light signals in the measurement period T9. In Fig. 14, the signal processing circuit 120 is for integrating the intensities in two received-light signals. With configuration in which the light-receiving element 118 is exposed to light for multiple times in the measurement period T9, the S/N ratio can be improved also.

The signal processing circuit 120 may integrate intensities of the light 6 in the plurality of received-light signals for every wavelength. The light-receiving element 118 or the signal processing circuit 120 may control the measurement period, or the light exposure period for every wavelength. For example, the light-receiving element 118 may cause a light exposure time to be shorter for a wavelength having a higher intensity of the light 6. Similarly, the signal processing circuit 120 may cause a measurement period to be shorter for a wavelength having a higher intensity of the light 6. By means of changing an integration method in every wavelength, a difference in intensities of the radiation spectra of the light 6 can be reduced. Further, a signal intensity in a received-light signal can be prevented from being saturated.

The signal processing circuit 120 may also average integration signals obtained by integrating the plurality of received-light signals, and measure a concentration of the measurement target component. For example, after separately integrating wavelengths near the area R1 of Fig. 2 and wavelengths in an area other than near the area R1 of Fig. 2, an average is obtained from the number of the integrations. By means of averaging, wavelengths having a number of integrations different from each other can also be compared, and thereby concentration can be measured precisely.

The light exposure period for the light-receiving element 118 may be changed based on the intensity of the radiation spectrum of the light 6. The light exposure period for the light-receiving element 118 may be changed by the light-receiving element 118, or the signal processing circuit 120. For example, when making an intensity higher, a number of light exposures in the measurement period may be increased. By way of example, as illustrated in Fig. 14, the number of light exposures can be two.

In the example of Fig. 14, a number of flashes of the light source unit 2 in one light exposure period T8 may also be one. In this case also, the number of flashes of the light source unit 2 in one measurement period T9 is more than one. Therefore, measurement precision can be improved.

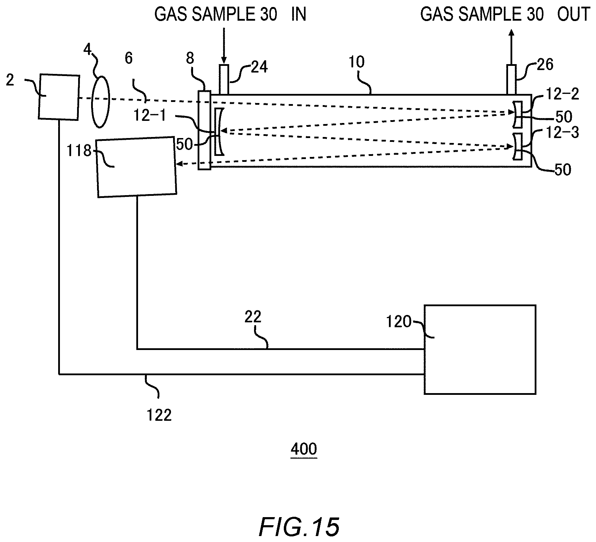

Fig. 15 illustrates an example of structure of a gas analyzer 400 according to another embodiment. The gas analyzer 400 is different from the gas analyzer 300 illustrated in Fig. 9 in that the gas analyzer 400 includes a communication line 122. Otherwise, configuration of the gas analyzer 400 may be the same as that of the gas analyzer 300.

In Fig. 15, the signal processing circuit 120 controls the number of irradiations of the light source unit 2 through the communication line 122. The number of irradiations of the light source unit 2 refers to the number of times of the light 6 to be irradiated during one measurement period. That is, controlling the number of irradiations of the light source unit 2 refers to controlling a flash cycle of the light source unit 2.

The gas analyzer 400 measures a received-light intensity $P_0$ of a certain wavelength at the time of when a gas concentration of the gas sample 30 is 0 ppm, and a received-light intensity $P$ of this wavelength at the time of when the gas sample 30 is introduced into the cell 10, and then calculates an absorbance $A$ shown in the following equation 2. As shown in the equation 2, if the received-light intensity $P_0$ is low, the absorbance $A$ is greatly changed when the received-light intensity $P$ fluctuates. In other words, if the received-light intensity $P$ fluctuates due to a variation in flashes of the light source unit 2 when the received-light intensity $P_0$ is low, a measurement result for the absorbance $A$ is greatly changed. Therefore, it is preferable for the received-light intensity $P_0$ to be as high as possible. On the other hand, the received-light intensity $P_0$ may be gradually reduced due to a temporal change of a characteristic of the light source unit 2, the light-receiving element 18, cell window 8, and the like. It is preferable to make the received-light intensity $P_0$ high by virtue of the signal processing circuit 120 adjusting the number of irradiations of the light source unit 2 through the communication line 122. The signal processing circuit 120 may increase the number of irradiations of the light source unit 2 when a measured received-light intensity $P_0$ becomes less than a predefined threshold value.

[EQUATION 2]
$$A = -\log(P/P_0)$$

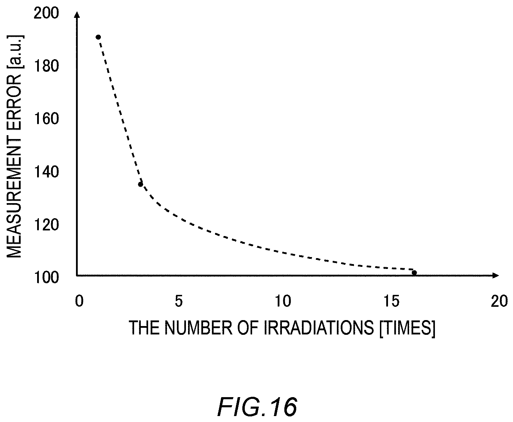

Fig. 16 illustrates a relationship between a number of irradiations of the light source unit 2 in a measurement period and a measurement error. The measurement error represents a magnitude of variation in measurement results in each measurement period when a single gas sample 30 is measured in a plurality of measurement periods. As illustrated in Fig. 16, the more the number of irradiations is increased, the more measurement errors are reduced, and measurement precision can be improved.

While the embodiments of the present invention have been described, the technical scope of the present invention is not limited to the above described embodiments. It is apparent to persons skilled in the art that various alterations and improvements, within the scope of the appended claims, can be added to the above described embodiments.

EXPLANATION OF REFERENCES

2: light source unit;
4: collimator lens;
6: light;
8: cell window;
10: cell;
12: reflecting mirror;
14: reflecting mirror;
18: light-receiving element;
20: signal processing circuit;
22: communication line;
24: gas sample inlet port;
26: gas sample outlet port;
30: gas sample;
40: adjustment unit;
50: reflection area;
100: gas analyzer;
118: light-receiving element;
120: signal processing circuit;
122: communication line;
200: gas analyzer;
300: gas analyzer;
400: gas analyzer

**Claims**

1. A gas analyzer (100, 200, 300, 400) configured to measure a concentration of a measurement target component contained in a gas sample (30), comprising:

   a cell (10) for encapsulating the gas sample (30);
   a light source unit (2) configured to emit a radiation spectrum of light (6) into the cell (10), the radiation spectrum of light (6) including an absorption wavelength of the measurement target component;
   a light-receiving element (18, 118) configured to obtain a received-light signal comprising an intensity of the radiation spectrum of the light (6) that has passed through the cell (10);
   a signal processing circuit (20, 120) configured to process the received-light signal and to measure, based on the processed received-light signal, a concentration of the measurement target component; and
   a reflecting mirror (12-1, 12-2, 12-3) arranged and disposed in the cell (10) such that the light emitted by the light source unit (2) and introduced into the cell (10) is reflected for multiple times inside the cell (10) before reaching the light-receiving element (18, 118), wherein the light (6) emitted by the light source unit (2) has a maximum intensity in a radiation spectrum at a certain wavelength, **characterized in that** the light-receiving element (18, 118) is configured to obtain an intensity of the light in a plurality of wavelengths including the certain wavelength, and
the reflecting mirror (12-1, 12-2, 12-3) has a reflectance which is lower at the certain wavelength than an average reflectance taken in a wavelength range from a minimum wavelength to a maximum wavelength among the plurality of wavelengths received at the light-receiving element (18, 118).

2. The gas analyzer (100, 200, 300, 400) according to claim 1, wherein

   a plurality of reflecting mirrors (12-1, 12-2, 12-3) is disposed inside the cell (10), and
   at least one of the reflecting mirrors (12-1, 12-2, 12-3) has a reflection area in which reflectances of at least two wavelengths are lower than the average reflectance.

3. The gas analyzer (100, 200, 300, 400) according to claims 1 or 2, wherein an additional reflecting mirror (14) with a reflectance which is lower at the certain wavelength than the average reflectance is arranged outside the cell (10).

4. The gas analyzer (100, 200, 300, 400)

   according to any one of claims 1 to 3, wherein the light source unit (2) is a flash lamp configured to flash at a regular flash cycle,
   the light-receiving element (18, 118) is configured to output the received-light signal,
   the signal processing circuit (20, 120) is configured to measure the concentration of the measurement target component based on one or more received-light signals, each being identical to the received-light signal, output by the light-receiving element (18, 118) depending on the light that enters into the light-receiving element (18, 118) in a predefined measurement period, and
   the measurement period is a period including two or more flashes of the light source unit (2).

5. The gas analyzer (100, 200, 300, 400) according to claim 4, wherein

   the light-receiving element (18, 118) is configured to be exposed to light for multiple times in the measurement period, and
the signal processing circuit (20, 120) is configured to integrate intensities of the light in a plurality of received-light signals, each being identical to the received-light signal, in the measurement period.

6. The gas analyzer (100, 200, 300, 400) according to claim 5, wherein the signal processing circuit (20, 120) is configured to integrate intensities of the light in the plurality of received-light signals for every wavelength.

7. The gas analyzer (100, 200, 300, 400) according to claim 5 or 6, wherein the signal processing circuit (20, 120) is configured to average integration signals obtained by integrating the plurality of received-light signals, and to measure the concentration of the measurement target component.

8. The gas analyzer (100, 200, 300, 400) according to claim 4, wherein the light-receiving element (18, 118) or the signal processing circuit (20, 120) is configured to change the light exposure period of the light-receiving element (18, 118) based on an intensity of the radiation spectrum of the light.

9. The gas analyzer (100, 200, 300, 400) according to claim 4, wherein

   the light-receiving element (18, 118) is configured to be exposed to light for once in the measurement period, and
   a light exposure period for the light-receiving element (18, 118) is a period including two or more flashes of the light source unit (2).

10. The gas analyzer (100, 200) according to any one of claims 1 to 3, wherein the light source unit (2) is a flash lamp.

**Patentansprüche**

1. Gasanalysator (100, 200, 300, 400), eingerichtet zum Messen einer Konzentration einer in einer Gasprobe (30) enthaltenen Messzielkomponente, umfassend:

   eine Zelle (10) zum Einkapseln der Gasprobe (30);
   eine Lichtquelleneinheit (2), die eingerichtet ist, ein Lichtstrahlungsspektrum (6) in die Zelle (10) zu emittieren, wobei das Lichtstrahlungsspektrum (6) eine Absorptionswellenlänge der Messzielkomponente umfasst; ein Lichtempfangselement (18, 118), das eingerichtet ist, ein Lichtempfangssignal zu erhalten, das eine Intensität des Lichtstrahlungsspektrums (6) umfasst, das durch die Zelle (10) hindurchgegangen ist;

eine Signalverarbeitungsschaltung (20, 120), die eingerichtet ist, das Lichtempfangssignal zu verarbeiten und basierend auf dem verarbeiteten Lichtempfangssignal eine Konzentration der Messzielkomponente zu messen; und

einen reflektierenden Spiegel (12-1, 12-2, 12-3), der in der Zelle (10) derart ausgeführt und angeordnet ist, dass das von der Lichtquelleneinheit (2) emittierte und in die Zelle (10) eingeleitete Licht innerhalb der Zelle (10) mehrere Male reflektiert wird, bevor es das Lichtempfangselement (18, 118) erreicht, wobei das von der Lichtquelleinheit (2) emittierte Licht (6) ein Strahlungsspektrum mit maximaler Intensität bei einer bestimmten Wellenlänge aufweist, **dadurch gekennzeichnet, dass**

das Lichtempfangselement (18, 118) eingerichtet ist, eine Intensität des Lichts in mehreren Wellenlängen einschließlich der bestimmten Wellenlänge zu erhalten,

und

der reflektierende Spiegel (12-1, 12-2, 12-3) einen Reflexionsgrad aufweist, der bei der bestimmten Wellenlänge niedriger ist als ein durchschnittlicher Reflexionsgrad, der in einem Wellenlängenbereich von einer minimalen Wellenlänge bis zu einer maximalen Wellenlänge unter den mehreren an dem Empfangselement (18, 118) empfangenen Wellenlängen genommen wird.

2. Gasanalysator (100, 200, 300, 400) nach Anspruch 1, wobei

mehrere reflektierende Spiegel (12-1, 12-2, 12-3) innerhalb der Zelle (10) angeordnet sind und

mindestens einer der reflektierenden Spiegel (12-1, 12-2, 12-3) einen Reflexionsbereich aufweist, in dem die Reflexionsgrade von mindestens zwei Wellenlängen niedriger sind als der durchschnittliche Reflexionsgrad.

3. Gasanalysator (100, 200, 300, 400) nach Anspruch 1 oder 2, wobei ein zusätzlicher reflektierender Spiegel (14) mit einem Reflexionsgrad, der bei der bestimmten Wellenlänge niedriger ist als der durchschnittliche Reflexionsgrad, außerhalb der Zelle (10) angeordnet ist.

4. Gasanalysator (100, 200, 300, 400) nach einem der Ansprüche 1 bis 3, wobei

die Lichtquelleneinheit (2) eine Blitzlampe ist, die eingerichtet ist, in einem regelmäßigen Blitzzyklus zu blinken,

das Lichtempfangselement (18, 118) eingerichtet ist, das Lichtempfangssignal auszugeben,

die Signalverarbeitungsschaltung (20, 120) eingerichtet ist, die Konzentration der Messzielkomponente basierend auf einem oder mehreren Lichtempfangssignalen zu messen, die jeweils mit dem Lichtempfangssignal identisch sind, das von dem Lichtempfangselement (18, 118) in Abhängigkeit von dem Licht, das in einem vordefinierten Messzeitraum in das Lichtempfangselement (18, 118) eintritt, ausgegeben wird, und

der Messzeitraum ein Zeitraum ist, der zwei oder mehr Blitze der Lichtquelleneinheit (2) umfasst.

5. Gasanalysator (100, 200, 300, 400) nach Anspruch 4, wobei

das Lichtempfangselement (18, 118) eingerichtet ist, in dem Messzeitraum mehrfach Licht ausgesetzt zu werden, und

die Signalverarbeitungsschaltung (20, 120) eingerichtet ist, Intensitäten des Lichts in mehrere Lichtempfangssignale, die jeweils mit dem Lichtempfangssignal identisch sind, in dem Messzeitraum zu integrieren.

6. Gasanalysator (100, 200, 300, 400) nach Anspruch 5, wobei die Signalverarbeitungsschaltung (20, 120) eingerichtet ist, Intensitäten des Lichts in den mehreren Lichtempfangssignalen für jede Wellenlänge zu integrieren.

7. Gasanalysator (100, 200, 300, 400) nach Anspruch 5 oder 6, wobei die Signalverarbeitungsschaltung (20, 120) eingerichtet ist, Integrationssignale, die durch Integrieren der mehreren empfangenen Lichtsignale erhalten werden, zu mitteln und die Konzentration der Messzielkomponente zu messen.

8. Gasanalysator (100, 200, 300, 400) nach Anspruch 4, wobei das Lichtempfangselement (18, 118) oder die Signalverarbeitungsschaltung (20, 120) eingerichtet ist, die Belichtungsdauer des Lichtempfangselements (18, 118) basierend auf einer Intensität des Strahlungsspektrums des Lichts zu ändern.

9. Gasanalysator (100, 200, 300, 400) nach Anspruch 4, wobei

das Lichtempfangselement (18, 118) eingerichtet ist, einmal in dem Messzeitraum Licht ausgesetzt zu werden,

und

eine Belichtungsdauer für das Lichtempfangselement (18, 118) ein Zeitraum ist, der zwei oder mehr Blitze der Lichtquelleneinheit (2) umfasst.

10. Gasanalysator (100, 200) nach einem der Ansprüche 1 bis 3, wobei die Lichtquelleneinheit (2) eine Blitzlampe ist.

## Revendications

1. Analyseur de gaz (100, 200, 300, 400) configuré pour mesurer une concentration d'un composant cible de mesure contenu dans un échantillon de gaz (30), comprenant :

   une cellule (10) pour encapsuler l'échantillon de gaz (30) ;
   une unité de source lumineuse (2) configurée pour émettre un spectre de rayonnement de lumière (6) dans la cellule (10), le spectre de rayonnement de lumière (6) comprenant une longueur d'onde d'absorption du composant cible de mesure ;
   un élément de réception de lumière (18,118) configuré pour obtenir un signal de lumière reçue comprenant une intensité du spectre de rayonnement de la lumière (6) qui a traversé la cellule (10) ;
   un circuit de traitement de signal (20,120) configuré pour traiter le signal de lumière reçue et mesurer, sur la base du signal de lumière reçue traité, une concentration du composant cible de mesure ; et
   un miroir réfléchissant (12-1,12-2,12-3) agencé et disposé dans la cellule (10) de sorte que la lumière émise par l'unité de source lumineuse (2) et introduite dans la cellule (10) soit réfléchie de multiples fois à l'intérieur de la cellule (10) avant d'atteindre l'élément de réception de lumière (18,118), dans lequel
   la lumière (6) émise par l'unité de source lumineuse (2) a une intensité maximale dans un spectre de rayonnement à une certaine longueur d'onde,
   **caractérisé en ce que**
   l'élément de réception de lumière (18,118) est configuré pour obtenir une intensité de la lumière dans une pluralité de longueurs d'ondes comprenant la certaine longueur d'onde et
   le miroir réfléchissant (12-1,12-2,12-3) a une réflectance qui est inférieure à la certaine longueur d'onde à une réflectance moyenne prise dans une plage de longueur d'onde allant d'une longueur d'onde maximale à une longueur d'onde maximale parmi la pluralité de longueurs d'ondes reçues au niveau de l'élément de réception de lumière (18,118).

2. Analyseur de gaz (100, 200, 300, 400) selon la revendication 1, dans lequel

   une pluralité de miroirs réfléchissants (12-1,12-2,12-3) est disposée à l'intérieur de la cellule (10) et
   au moins un des miroirs réfléchissants (12-1,12-2,12-3) a une zone de réflexion dans laquelle les réflectances d'au moins deux longueurs d'onde sont inférieures à la réflectance moyenne.

3. Analyseur de gaz (100, 200, 300, 400) selon les revendications 1 ou 2, dans lequel un miroir réfléchissant supplémentaire (14) avec une réflectance qui est inférieure à la certaine longueur d'onde à la réflectance moyenne est agencé à l'extérieur de la cellule (10).

4. Analyseur de gaz (100, 200, 300, 400) selon une quelconque des revendications 1 à 3, dans lequel l'unité de source lumineuse (2) est une lampe flash configurée pour clignoter selon un cycle de clignotement régulier,

   l'élément de réception de lumière (18,118) est configuré pour délivrer le signal de lumière reçue,
   le circuit de traitement de signal (20,120) est configuré pour mesurer la concentration du composant cible de mesure sur la base d'un ou plusieurs signaux lumineux reçus, étant chacun identiques au signal lumineux reçu, délivré par l'élément de réception de lumière (18,118) en fonction de la lumière qui entre dans l'élément de réception de lumière (18,118) dans une période de mesure prédéfinie, et
   la période de mesure est une période comprenant deux ou plusieurs clignotements de l'unité de source lumineuse (2).

5. Analyseur de gaz (100, 200, 300, 400) selon la revendication 4, dans lequel

   l'élément de réception de lumière (18,118) est configuré pour être exposé à la lumière de multiples fois pendant la période de mesure et
   le circuit de traitement de signal (20,120) est configuré pour intégrer des intensités de la lumière dans une pluralité de signaux de lumière reçue étant chacun identiques au signal de lumière reçue, pendant la période de mesure.

6. Analyseur de gaz (100, 200, 300, 400) selon la revendication 5, dans lequel le circuit de traitement de signal (20,120) est configuré pour intégrer des intensités de la lumière dans la pluralité de signaux lumineux reçus pour chaque longueur d'onde.

**7.** Analyseur de gaz (100, 200, 300, 400) selon la revendication 5 ou 6, dans lequel le circuit de traitement de signal (20,120) est configuré pour calculer une moyenne des signaux d'intégration obtenus en intégrant la pluralité de signaux de lumière reçue et mesurer la concentration du composant cible de mesure.

**8.** Analyseur de gaz (100, 200, 300, 400) selon la revendication 4, dans lequel l'élément de réception de lumière (18,118) ou le circuit de traitement de signal (20,120) est configuré pour modifier la période d'exposition à la lumière de l'élément de réception de lumière (18,118) sur la base d'une intensité du spectre de rayonnement de la lumière.

**9.** Analyseur de gaz (100, 200, 300, 400) selon la revendication 4, dans lequel l'élément de réception de lumière (18,118) est configuré pour être exposé à la lumière une fois pendant la période de mesure et une période d'exposition à la lumière de l'élément de réception de lumière (18,118) est une période comprenant deux ou plusieurs clignotements de l'unité de source lumineuse (2).

**10.** Analyseur de gaz (100,200) selon une quelconque des revendications 1 à 3, dans lequel l'unité de source lumineuse (2) est une lampe flash.

GAS SAMPLE 30 IN          GAS SAMPLE 30 OUT

FIG.1

*FIG.2*

*FIG.3*

*FIG.4*

*FIG.5*

*FIG.6*

*FIG.7*

GAS SAMPLE 30  IN          GAS SAMPLE 30  OUT

FIG.8

GAS SAMPLE 30  IN            GAS SAMPLE 30  OUT

FIG.9

T1

LAMP
OPERATION CYCLE

FLASH CYCLE

LIGHT
EXPOSURE PERIOD

T2

T3

*FIG.10*

*FIG.11*

(a)

DIFFERENTIAL ABSORBANCE

WAVELENGTH

(b)

DIFFERENTIAL ABSORBANCE

WAVELENGTH

THE NUMBER OF
INTEGRATIONS
INCREASES

(c)

DIFFERENTIAL ABSORBANCE

WAVELENGTH

*FIG.12*

*FIG.13*

*FIG.14*

GAS SAMPLE 30  IN          GAS SAMPLE 30  OUT

*FIG.15*

FIG.16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001188043 A
- US 5867329 A
- JP 2004138520 A
- CN 102183482 A
- US 5854685 A
- JP 2003014634 A
- JP H0943141 A
- US 2012170043 A1